# EUROPEAN PATENT APPLICATION

(11) **EP 3 128 340 A1**
(43) Date of publication of application: **08.02.2017**
(21) Application number: 15179605.9
(22) Date of filing: 04.08.2015
(51) Int. Cl.: G01S 7/38, G01S 7/495, F41H 3/00, G02F 1/01, G02F 1/29

(54) **METHOD AND APPARATUS FOR MODIFYING AN ELECTROMAGNETIC SIGNAL**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

A counter measure method and apparatus for modifying an incoming electromagnetic signal so as to delay propagation thereof, in which is created an atmospheric element (202) operative to simulate a physical spatial radiation modulator within an atmospheric volume (10) located between a platform (200) and said incoming electromagnetic signal (204). The atmospheric spatial radiation modulator (202) is created by causing electromagnetic radiation (201) from a source to be applied to a selected plurality of three-dimensional portions of said atmospheric volume (10) so as to heat and/or ionise the air within said portions, wherein the selected portions are spatially located together in a three-dimensional configuration and operative to alter the transverse spatial structure of said incoming electromagnetic signal (204).

## Description

This invention relates generally to a method and apparatus for modifying an electromagnetic signal and, more particularly but not necessarily exclusively, to a method and apparatus for modulating a detected electromagnetic signal for the purpose of generating a selected response thereto.

Passive and active electronic counter measures (ECMs) are in widespread use, particularly in military applications, and have as their general purpose to prevent, delay or confuse radar, sonar or other detection systems, like infrared (IR) or lasers. ECM may be used both offensively and defensively to deny targeting information to an adversary, and may be configured to make many separate targets appear to the adversary, or make the real target seem to disappear, appear further away than it actually is, or move about randomly, for example. It is used effectively protect aircraft from guided missiles or avoid detection, and most air forces use ECM to protect their aircraft from attack. It has also been deployed by military ships and recently on some advanced tanks to deceive adversary detection/weapons systems. Offensive ECM often takes the form of jamming, whereas defensive ECM includes using blip enhancement and jamming of missile terminal homers.

One of the principal issues associated with at least some types of ECM is the speed at which the counter measure needs to be facilitated, in view of the speed of propagation in free space of electromagnetic radiation signals. There is an ongoing effort to ensure that any such counter measures can be effectively performed in real time, however, there is an inherent limit to the degree of disruptive or deceptive action that can be taken within the time available to do so effectively. Thus, it would be desirable to provide a counter method and apparatus in which an incoming electromagnetic radiation signal can be modified so as to potentially enable more robust and/or extensive disruptive or deceptive action to be taken in respect thereof, and it is an object of at least some aspects of the present invention to address these issues.

In accordance with an aspect of the present invention, there is provided a counter measure apparatus for modifying an incoming electromagnetic signal so as to delay propagation thereof, the apparatus comprising an electromagnetic source, communicably coupled to a control system, the control system being configured to create an atmospheric element operative to simulate a physical spatial radiation modulator within an atmospheric volume located between a platform and said incoming electromagnetic signal by causing electromagnetic radiation from said source to be applied to a selected plurality of three-dimensional portions of said atmospheric volume so as to heat and/or ionise the air within said portions, wherein said selected portions are spatially located together in a three-dimensional configuration and operative to alter the transverse spatial structure of said incoming electromagnetic signal.

The electromagnetic radiation source may include a beam steering mechanism for selectively steering a beam of electromagnetic radiation output therefrom, said control system optionally being communicably coupled to said beam steering mechanism and configured to generate signals for steering said beam of electromagnetic radiation relative to said atmospheric volume so as to sequentially apply electromagnetic radiation to said selected portions.

The apparatus may comprise a beam splitting module for splitting a beam output from said electromagnetic radiation source into a plurality of paths corresponding to relative locations of selected portions.

In an exemplary embodiment of the invention, the control system may comprise a database on which is stored data representative of a three-dimensional configuration of individual three-dimensional elements corresponding to a simulated physical spatial radiation modulator, and, optionally, a processor for mapping said stored three-dimensional configuration of elements to respective selected portions of said atmospheric volume, the processor being configured to generate actuation signals configured to cause said electromagnetic radiation source to apply electromagnetic radiation to said selected plurality of portions of said atmospheric volume, corresponding to said stored thee-dimensional configuration of elements, so as to heat and/or ionise the air therein.

The apparatus may further comprise an atmospheric element monitoring module for monitoring atmospheric conditions, generating data representative thereof, and transmitting said data to said processor, said processor being configured to generate adjusted actuation signals configured to adjust at least one characteristic of said electromagnetic radiation from said source so as to compensate for atmospheric distortion.

In an exemplary embodiment of the invention, the apparatus may further comprise a quality monitoring module for monitoring the performance of the atmospheric spatial radiation modulator against a predefined set of desired criteria, and generating signals to dynamically adjust beam steering and/or power of said electromagnetic radiation source so as to reduce or eliminate deviation of the properties and characteristics of the atmospheric spatial radiation modulator from that which is defined by the predefined criteria.

The apparatus may further comprise a tracking module for tracking the path of said incoming electromagnetic signal and generating a tracking signal for use by said control system to adjust the location of said atmospheric volume so as to maintain said atmospheric spatial radiation modulator within said path of said incoming electromagnetic signal.

In apparatus according to an exemplary embodiment, the selected portions may be spatially located together in a substantially unbroken three-dimensional configuration corresponding to the three-dimensional shape of a simulated physical electromagnetic radiation path modifying device.

In an exemplary embodiment, the apparatus may be configured to cause said electromagnetic radiation from said source to heat and/or ionise at least one additional atmospheric volume located between said platform and said incoming electromagnetic signal so as to create at least one additional respective atmospheric electromagnetic radiation path modifying element configured to divert or otherwise modify said incoming electromagnetic signal from said path and thereby increase the path length of said incoming electromagnetic signal from its source to said platform, thus increasing the propagation delay thereof.

The selected portions may define a plurality of three dimensional shapes, each spatially separated from each other within said atmospheric volume. In this case, the three-dimensional shapes, spatially separated, may define a plurality of concentric transmissive and adjacent substantially opaque or divergent regions.

The electromagnetic radiation source may comprise one or more lasers.

In accordance with another aspect of the present invention, there is provided a counter measure method for modifying an incoming electromagnetic signal so as to delay propagation thereof, the method comprising providing an electromagnetic source and a control system communicably coupled thereto, the method further comprising configuring said control system to create an atmospheric element operative to simulate a physical spatial radiation modulator within an atmospheric volume located between a platform and said incoming electromagnetic signal by causing electromagnetic radiation from said source to be applied to a selected plurality of three-dimensional portions of said atmospheric volume so as to heat and/or ionise the air within said portions, wherein said selected portions are spatially located together in a three-dimensional configuration and operative to alter the transverse spatial structure of said incoming electromagnetic signal.

The atmospheric volume may be divided into an array of three-dimensional portions, and the method may comprise the step of applying electromagnetic radiation to said selected portions within said array.

Aspects of the present invention further extend to a control system for apparatus as described above, the control system being configured to be communicably coupled to an electromagnetic radiation source and create an atmospheric element operative to simulate a physical spatial radiation modulator within an atmospheric volume located between a platform and said incoming electromagnetic signal by causing electromagnetic radiation from said source to be applied to a selected plurality of three-dimensional portions of said atmospheric volume so as to heat and/or ionise the air within said portions, wherein said selected portions are spatially located together in a three-dimensional configuration and operative to alter the transverse spatial structure of said incoming electromagnetic signal.

For the avoidance of doubt, the term "transverse" used herein to describe the spatial structure of the beam is intended to mean substantially transverse to the direction of propagation of the beam.

These and other aspects of the present invention will be apparent from the following specific description, in which embodiments of the present invention are described, by way of examples only, and with reference to the accompanying drawings, in which:
Figure 1 is a schematic diagram illustrating the concept of an M by N cell matrix for the purposes of defining an atmospheric volume within which an atmospheric spatial radiation modulator may be created in accordance with principles employed in an exemplary embodiment of the present invention.
Figure 2 is a schematic diagram illustrating the manner in which laser power may be applied to selected cells within a matrix in accordance with the principles employed in a first exemplary embodiment of the present invention;
Figure 3 is a schematic diagram illustrating an alternative manner in which laser power may be applied to selected cells within a matrix in accordance with the principles employed in another exemplary embodiment of the present invention;
Figure 4 is a schematic diagram illustrating an atmospheric spatial radiation modulator created in accordance with the principles employed in an exemplary embodiment of the present invention;
Figure 5 is a schematic diagram illustrating an altered atmospheric spatial radiation modulator created in accordance with the principles employed in an exemplary embodiment of the present invention;
Figure 6 is a schematic block diagram illustrating apparatus for creating an atmospheric spatial radiation modulator according to an exemplary embodiment of the present invention; and
Figure 7 is a schematic diagram illustrating the configuration and operation of apparatus according to an exemplary embodiment of the present invention.

Thus, aspects of the present invention operate on the principle of using one or more laser devices to selectively cause heating or ionisation of portions of a three-dimensional region of the atmosphere so as to create or simulate a spatial radiation modulator of a desired size and having selected electromagnetic radiation modifying properties for changing the transverse spatial structure of an electromagnetic beam passing therethrough. For the avoidance of doubt, and as stated above, the term "transverse" used herein to describe the spatial structure of the beam is intended to mean substantially transverse to the direction of propagation of the beam. It is known from Daniel Giovanni, et al, "Spatially structured photons that travel in free space slower than the speed of light", Science 347, 357-860, February 2015 that a reduction in the group velocity of an electromagnetic beam can be reduced by changing the transverse spatial structure of the beam. Thus aspects of the present invention also operate on the basis of using a spatial radiation modulator to introduce a delay in an incoming electromagnetic signal from an adversary, for example, thereby allowing more time for an ECM system to disrupt, alter or otherwise modify the signal to deceive the adversary's systems.

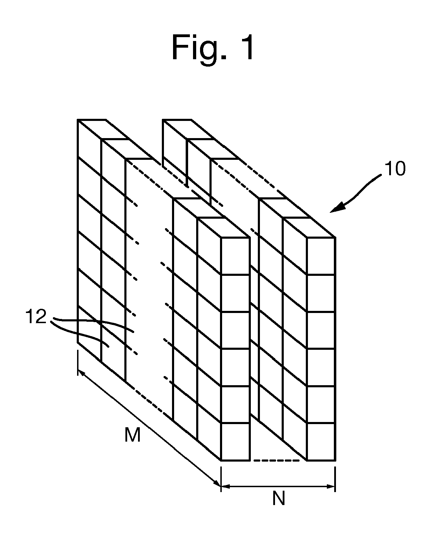

In general, and referring to Figure 1 of the drawings, the volume of the atmosphere in which an EM radiation path modifying component is required to be created can be considered as a cell matrix 10 comprised of M rows and N columns or layers of 'cells' 12, wherein a cell is simply a predefined three-dimensional portion of the matrix. In the example shown, each cell is identical in size and shape, but this is not essential, and the present invention is not necessarily intended to be limited in this regard. It will also be appreciated that the number of cells in the vertical dimension of the cell matrix may vary. Thus, the cell matrix may be of any desired size, shape and number of cells.

Within the matrix 10, the three dimensional structure of an EM radiation path modifying device can be defined in terms of a number of cells 12 in a desired configuration, and it is these cells that will then be targeted by the laser source in order to effect the desired change in their respective properties, i.e. by heating and/or ionisation thereof.

It is known that an increase in temperature of a volume of air causes a corresponding decrease in density of that volume of air. As a result, the refractive index of warm air is lower than that of cooler (and therefore denser) air. Thus, some aspects of the present invention may operate on the principle that by providing a volume of air that is warmer than the air around it, that volume of air can cause refraction of a beam of electromagnetic radiation as it passes through, in a manner similar to a convergent or divergent lens.

It is also known that if an electric field of a sufficiently high power is applied to a volume of air, the air may be ionised. Ionised air has reflective properties over a range of electromagnetic radiation wavelengths, such properties being a function of density and the type of ionisation created. Thus, some aspects of the present invention operate on the principle that by ionising a volume of air can cause it to reflect a beam of electromagnetic radiation as it hits that volume, in a manner similar to a mirror or similarly reflective device. A mixture of the two principles can be used to create a diffractive element.

Referring back to Figure 1 of the drawings, it will be appreciated that by selectively heating or ionising cells 12 within the matrix 10 a three dimensional atmospheric spatial radiation modulator can be created using a high power electromagnetic radiation source. This may be achieved in a number of different ways. For example, a pulsed power laser (PPL) may be employed, and the 'Kerr' effect exploited therewith in order to attain self focussing of the laser beam at a required point (i.e. within the selected cell). Alternatively, a combination (i.e. crossing over) of two continuous wave (CW) laser beams at a required point may be used to achieve the desired effect. In any event, the laser system(s) is/are configured to selectively heat or ionise the atmosphere, thus changing its refractive index and electromagnetic properties such that electromagnetic energy passing through the heated cells is refracted and/or electromagnetic energy hitting the ionised cells is reflected.

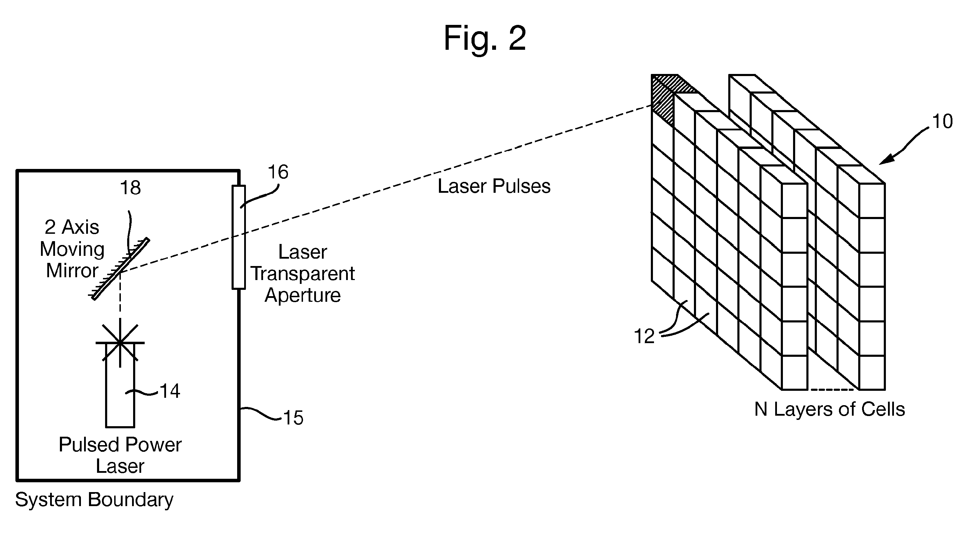

Thus, referring to Figure 2 of the drawings, apparatus according to one exemplary embodiment of the present invention comprises at least one laser source 14 mounted in an enclosure 15. In the example shown, the laser source 14 is a pulsed power laser source configured to emit high power laser pulses toward the cell matrix 10 via a laser transparent aperture 16. An optically reflective device, i.e. mirror, 18 is mounted on a dual-axis actuator (not shown) in the main laser output path, the actuator being communicably coupled with a control system that is configured to cause the actuator (and, therefore, the mirror 18) to move thereby to selectively direct the laser output through the aperture 16 toward selected cells 12 of the matrix 10. The control system may, for example, be configured to cause the laser output to be scanned across the cell matrix providing a pulse (or more than one pulse) to each selected cell, either via a raster pattern or a pattern optimised to suit the type of atmospheric component required to be created and its operational requirements.

As mentioned briefly above, the laser pulse is self-focussing by means of the 'Kerr' effect, thereby enabling it to deliver enough concentrated power to heat or ionise the cell at which it is directed. The Kerr effect is a change in the refractive index of a material in response to an applied electric field. In the case of a laser pulse of sufficiently high power, its electric field is sufficiently high to change the refractive index of the air. As a result, the cross-sectional area of the pulse (perpendicular to the direction of propagation) can be thought of as shrinking with distance (due to the differences in refractive index), thus bringing the pulse to an intense focus at some point down range of the laser, in this case at the selected cell. This intense focus is of sufficiently high intensity to heat or ionise the cell to change its refractive index and/or other EM radiation path modifying properties. One or more pulses may be provided per cell, dependent upon the desired effect and environmental conditions. It may also be necessary to periodically re-supply laser pulses to all selected cells to maintain the required change in refractive index and/or ionisation for as long as the atmospheric component is required, as once the laser power is removed from a cell, the air therein will very quickly return to its normal (unheated or non-ionised) state.

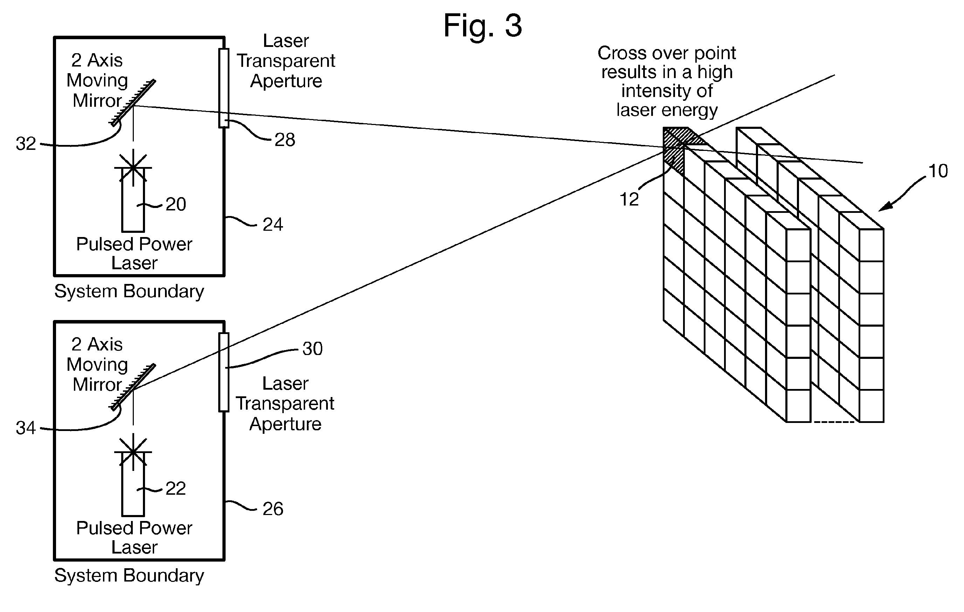

Referring to Figure 3 of the drawings, in an alternative exemplary embodiment of the invention, two (or more) CW (continuous wave) laser sources 20, 22 may be provided in respective enclosures 24, 26, each having a laser transparent aperture 28, 30 therein. Once again, each laser system is provided with a mirror 32, 34 mounted on a dual-axis actuator (not shown) communicably coupled to a control system (not shown). Operation of the system is similar, in principle, to that described previously with reference to Figure 3 of the drawings except, in this case, two (or more) spatially separated CW lasers (which may be mounted on the same platform or across different platforms) are used to selectively heat/ionise the atmosphere in each required cell. This is achieved by ensuring (through pointing) that the laser beams cross over at the same point (in the selected cell 12), thereby ensuring that sufficient power is attained. Such scanning may be performed on the basis of a control system configured to maintain a predetermined spatial separation and orientation between the atmospheric component and the electromagnetic radiation source. However, in an alternative exemplary embodiment, such scanning may be performed using a control system configured to direct the source(s) at specific coordinates corresponding to specific respective locations within the atmosphere.

In yet another exemplary embodiment, and either in addition to the above-mentioned arrangements or alternatively, it is envisaged that a beam splitter could be employed to split a laser beam into numerous new paths corresponding to the configuration of a plurality of respective cells to be targeted. Thus, a plurality of such cells could be targeted simultaneously, without the need for scanning a single laser path across the cell matrix.

In the following, exemplary atmospheric spatial radiation modulators that can be created according to the principles employed in respective exemplary embodiments of the invention are described. However, it will be appreciated by a person skilled in the art that the principles set forth herein can be applied in numerous ways in order to create other configurations of spatial radiation modulating components for changing the transverse spatial structure of an electromagnetic radiation beam passing therethrough, and the present invention is not necessarily intended to be limited in this regard.

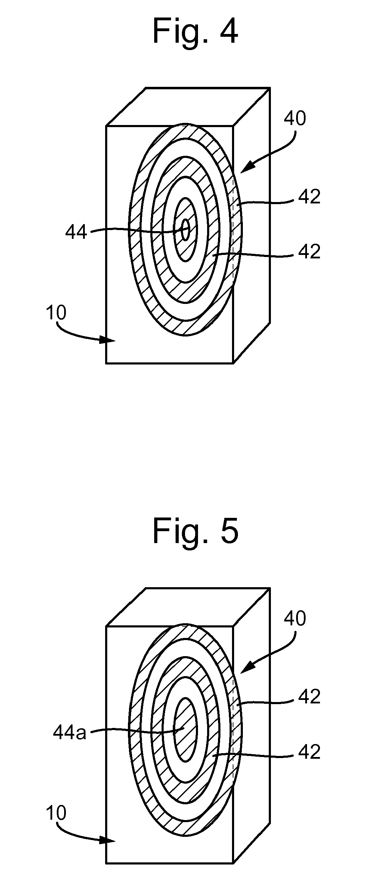

Referring to Figure 4 of the drawings, an exemplary embodiment of the present invention may be employed to create an atmospheric spatial radiation modulator 40 comprised of a plurality of diametrically spaced apart concentric rings 42. The rings 42 may be comprised of ionised (reflective) cells or they may comprised of heated (refractive) cells, in which case each ring may comprise an annulus having, for example, a double concave cross section (thereby making those regions diverging in respect of an incoming electromagnetic signal). In the illustrated example, the central, substantially circular region 44 is unchanged, i.e. not ionised or heated and, therefore, normally transmissive according to the atmospheric conditions in which the element has been created.

The resultant atmospheric element has the effect of blocking, or diverging, some portions of an incoming electromagnetic beam so as to alter the transverse spatial structure thereof, as shown. It will be appreciated that any number of different modulator patterns may be achieved in this manner and the present invention is not necessarily intended to be limited in this regard. However, it will also be appreciated that the degree of delay in the resultant spatially modulated signal can be increased by increasing the so-called numerical aperture of the atmospheric modulator.

Thus, referring to Figure 5 of the drawings, in an alternative exemplary embodiment, the central region may, in fact, be ionised or heated in the manner described above such that it operates as an atmospheric centre stop 44a, thereby increasing the numerical aperture of the atmospheric modulator and thus increasing the propagation delay applied to an incoming electromagnetic signal. It can be seen, therefore, that the propagation delay applied to the incoming electromagnetic beam can be selected and controlled by the size and configuration of the atmospheric modulator, in the same way as it could be selected during the design of a physical spatial modulator.

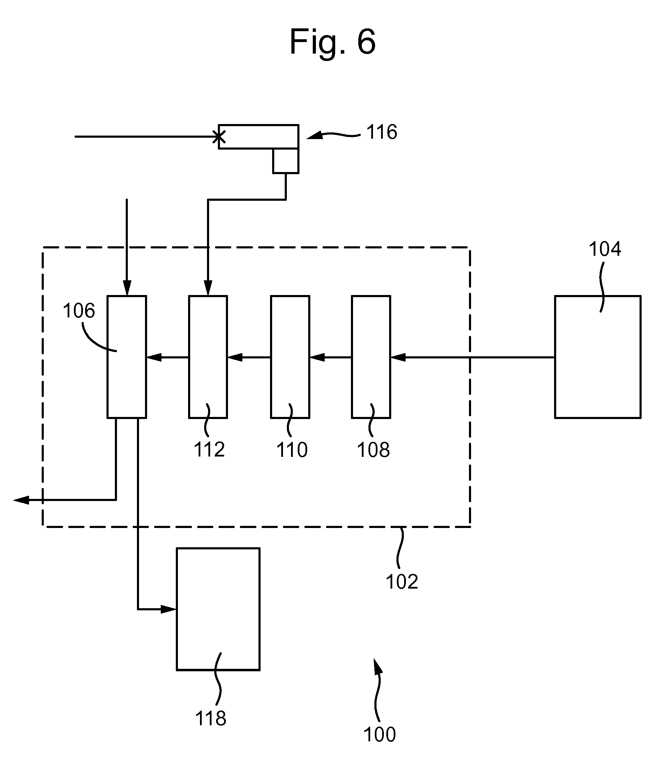

Referring to Figure 6 of the drawings, an apparatus in accordance with an exemplary embodiment of the present invention for creating an atmospheric spatial radiation modulator comprises a control module 100 communicably coupled to, for example, a dual-axis actuator on which a reflective component is mounted within a laser system such as that described above with reference to Figures 2 and 3 of the drawings. Such a laser system may, for example, be mounted in or on an airborne platform such as a manned aircraft or UAV.

The control module 100 comprises a processor 102 communicably coupled to a database 104. The database has stored therein data representative of one or more cell matrices, representative of respective atmospheric volumes, and the cells therein that need to be 'populated' (i.e. heated or ionised) in order to construct a respective three-dimensional atmospheric spatial radiation modulator. Such data may also include information as to the degree of ionisation/heating required to be maintained in order to achieve the required spatial modulating characteristics of the element. It will be appreciated that the database may simply include a single 'template' or populated cell matrix, bespoke to the platform or application in which the respective atmospheric element is to be used. However, in alternative exemplary embodiments, the database may include a plurality of different such templates from which a required atmospheric modulator can be selected for use, as required.

The processor 102 includes an input and an interface 106 for receiving an actuation signal indicative that an atmospheric modulator is required to be created, together with data representative of the size and orientation of the required component, and data representative of the position and orientation of the atmospheric component relative to the platform on which the apparatus is mounted, the electromagnetic radiation path to be spatially modified and/or the laser source used to create the atmospheric modulator. The actuation signal and accompanying data may be manually entered by an operative, but may equally be automatically generated in response to detection of an electromagnetic signal required to be intercepted by the platform. A module may be provided that, not only detects an incoming signal, but also tracks it as it moves relative to the platform, or the platform moves relative thereto, and generates data that can be used to change the relative position and orientation of the atmospheric modulator so as to ensure that it remains within the path of the incoming signal for as long as it is required to intercept it.

The processor 102, in response to the actuation signal, searches the database 104 for the populated cell matrix data corresponding to the atmospheric modulator required to be created, and retrieves the associated data. A transformation module 108 is provided, which transforms the matrix cell data onto data representative of the real atmospheric matrix cell within which the spatial radiation modulator is to be created, both in terms of size and orientation thereof, and determines precise coordinates for the location of each real atmospheric cell relative to the corresponding respective cell of the stored matrix (and also relative to the platform on which the apparatus is mounted, the electromagnetic signal to be intercepted and/or the laser source used to create the atmospheric modulator), and a mapping module 110 maps the respective population data from the stored cell matrix onto the data representative of the real atmospheric cell matrix accordingly. Thus, the processor now knows the precise physical location of each cell in the real atmospheric cell matrix and the cell 'population' pattern required to create the atmospheric modulator. Finally, such data is converted, by a signal processing module 112, into a scanning pattern comprised of a pattern of actuation signals configured to move and actuate the laser beam(s) in order to selectively heat/ionise the real atmospheric cell matrix in the required pattern (and to the required degree) to create the three-dimensional atmospheric spatial modulator. In other words, the actuation signals are configured to control the power and beam steering of the laser source(s) to heat/ionise each selected cell as required.

Furthermore, an atmospheric component monitoring system 116 may be provided within, or communicably coupled to, the control module 100. The atmospheric component monitoring system 116 may, for example, comprise a low power laser of a suitable wavelength (as will be apparent to a person skilled in the art) to detect atmospheric effects. Thus, the monitoring system 116 may form part of a feedback loop with the signal processing module 112 to enable the actuation signals to be adjusted to compensate for atmospheric distortion. In alternative exemplary embodiments, the apparatus may comprise a quality monitoring module for monitoring the performance (i.e. the properties and characteristics) of the atmospheric spatial modulator against a predefined set of desired criteria, and generating signals to dynamically adjust beam steering and/or power of the electromagnetic radiation source so as to reduce or eliminate deviation of the properties and characteristics of the atmospheric modulator from that which is defined by the predefined criteria. Such deviation may be caused by atmospheric distortion or otherwise. In other words, successive and/or continuous 'fine tuning' of the atmospheric modulator is facilitated to create and maintain an atmospheric modulator having consistently desired characteristics and quality.

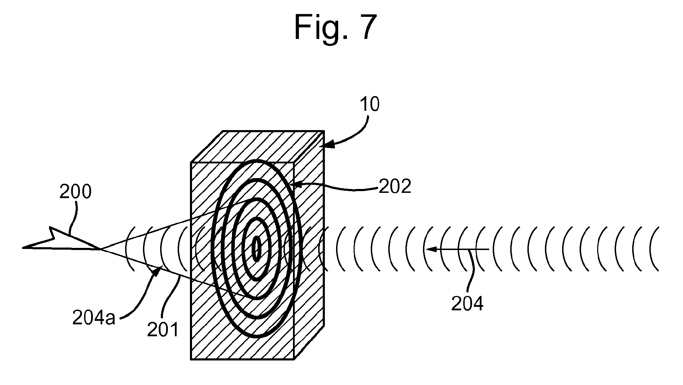

Referring to Figure 7 of the drawings, in a counter measure apparatus according to an exemplary embodiment of the present invention, the control system mounted on an aerial platform 200 may be configured to create, in the manner described above, a large atmospheric spatial modulator 202 (using on-board laser sources 201) at a location and orientation within the propagation path of an adversary signal 204 to ensure that transverse spatial modulation thereof is achieved. When the, thus spatially modulated, signal 204a reaches the ECM system on-board the aerial platform (or indeed on a platform remote therefrom in some configurations), signal has been delayed and a counter signal can be emitted for the purposes of disrupting or deceiving the adversary systems, in any known manner. However, in other exemplary embodiments, the incoming signal, thus modulated and delayed, may simply be permitted to be returned, unaltered, to an adversary detection system. In view of the permanent propagation delay applied to the signal, the adversary detection system will be deceived as to the position and/or relative distance at which the aerial platform 200 is located.

It will be apparent to a person skilled in the art, from the foregoing description that modifications and variations can be made to the described embodiments without departing from the scope of the invention as defined in the appended claims. For example, the control system may be configured to create multiple atmospheric electromagnetic radiation path modifying elements in the path of the incoming signal, the atmospheric elements being configured and oriented to increase the path length of the incoming signal between its source and the platform and, thereby further increase the propagation delay.

## Claims

1. A counter measure apparatus for modifying an incoming electromagnetic signal so as to delay propagation thereof, the apparatus comprising an electromagnetic source, communicably coupled to a control system, the control system being configured to create an atmospheric element operative to simulate a physical spatial radiation modulator within an atmospheric volume located between a platform and said incoming electromagnetic signal by causing electromagnetic radiation from said source to be applied to a selected plurality of three-dimensional portions of said atmospheric volume so as to heat and/or ionise the air within said portions, wherein said selected portions are spatially located together in a three-dimensional configuration and operative to alter the transverse spatial structure of said incoming electromagnetic signal.

2. Apparatus according to claim 1, wherein the electromagnetic radiation source includes a beam steering mechanism for selectively steering a beam of electromagnetic radiation output therefrom, said control system being communicably coupled to said beam steering mechanism and configured to generate signals for steering said beam of electromagnetic radiation relative to said atmospheric volume so as to sequentially apply electromagnetic radiation to said selected portions.

3. Apparatus according to claim 1 or claim 2, comprising a beam splitting module for splitting a beam output from said electromagnetic radiation source into a plurality of paths corresponding to relative locations of selected portions.

4. Apparatus according to any of the preceding claims, comprising a database on which is stored data representative of a three-dimensional configuration of individual three-dimensional elements corresponding to a simulated physical spatial radiation modulator, and a processor for mapping said stored three-dimensional configuration of elements to respective selected portions of said atmospheric volume, the processor being configured to generate actuation signals configured to cause said electromagnetic radiation source to apply electromagnetic radiation to said selected plurality of portions of said atmospheric volume, corresponding to said stored thee-dimensional configuration of elements, so as to heat and/or ionise the air therein.

5. Apparatus according to any of the preceding claims, further comprising an atmospheric element monitoring module for monitoring atmospheric conditions, generating data representative thereof, and transmitting said data to said processor, the apparatus comprising a processor configured to generate adjusted actuation signals configured to adjust at least one characteristic of said electromagnetic radiation from said source so as to compensate for atmospheric distortion.

6. Apparatus according to any of the preceding claims, further comprising a quality monitoring module for monitoring the performance of the atmospheric spatial radiation modulator against a predefined set of desired criteria, and generating signals to dynamically adjust beam steering and/or power of said electromagnetic radiation source so as to reduce or eliminate deviation of the properties and characteristics of the atmospheric spatial radiation modulator from that which is defined by the predefined criteria.

7. Apparatus according to any of the preceding claims, further comprising a tracking module for tracking the path of said incoming electromagnetic signal and generating a tracking signal for use by said control system to adjust the location of said atmospheric volume so as to maintain said atmospheric spatial radiation modulator within said path of said incoming electromagnetic signal.

8. Apparatus according to any of the preceding claims, configured to cause said electromagnetic radiation from said source to heat and/or ionise at least one additional atmospheric volume located between said platform and said incoming electromagnetic signal so as to create at least one additional respective atmospheric electromagnetic radiation path modifying element configured to divert or otherwise modify said incoming electromagnetic signal from said path and thereby increase the path length of said incoming electromagnetic signal from its source to said platform.

9. Apparatus according to any of the preceding claims, wherein the selected portions are spatially located together in a substantially unbroken three-dimensional configuration corresponding to the three-dimensional shape of a simulated physical electromagnetic radiation path modifying device.

10. Apparatus according to any of the preceding claims, wherein the selected portions define a plurality of three dimensional shapes, each spatially separated from each other within said atmospheric volume.

11. Apparatus according to claim 9, wherein the three-dimensional shapes, spatially separated, define a plurality of concentric transmissive and adjacent substantially opaque or divergent regions.

12. Apparatus according to any of the preceding claims, wherein the electromagnetic radiation source comprises one or more lasers.

13. A counter measure method for modifying an incoming electromagnetic signal so as to delay propagation thereof, the method comprising providing an electromagnetic source and a control system communicably coupled thereto, the method further comprising configuring said control system to create an atmospheric element operative to simulate a physical spatial radiation modulator within an atmospheric volume located between a platform and said incoming electromagnetic signal by causing electromagnetic radiation from said source to be applied to a selected plurality of three-dimensional portions of said atmospheric volume so as to heat and/or ionise the air within said portions, wherein said selected portions are spatially located together in a three-dimensional configuration and operative to alter the transverse spatial structure of said incoming electromagnetic signal.

14. A method according to claim 12, wherein the atmospheric volume is divided into an array of three-dimensional portions, and the method comprises the step of applying electromagnetic radiation to said selected portions within said array.

15. A control system for apparatus according to any of claims 1 to 11, the control system being configured to be communicably coupled to an electromagnetic radiation source and create an atmospheric element operative to simulate a physical spatial radiation modulator within an atmospheric volume located between a platform and said incoming electromagnetic signal by causing electromagnetic radiation from said source to be applied to a selected plurality of three-dimensional portions of said atmospheric volume so as to heat and/or ionise the air within said portions, wherein said selected portions are spatially located together in a three-dimensional configuration and operative to alter the transverse spatial structure of said incoming electromagnetic signal.
